# EUROPEAN PATENT APPLICATION

(11) **EP 4 418 408 A1**
(43) Date of publication of application: **21.08.2024**
(21) Application number: 24156471.5
(22) Date of filing: 08.02.2024
(51) Int. Cl.: H01M 10/613, H01M 10/647, H01M 10/654, H01M 10/6551, H01M 10/6554, H01M 50/105

(54) **BATTERY CELL WITH BUILT-IN COOLING SHEET AND BATTERY MODULE INCLUDING THE SAME**

(30) Priority: 15.02.2023 KR 20230019925
(71) Applicant: SK On Co., Ltd., Seoul 03161 (KR)
(72) Inventor: YUN, Young Hoon, 34124 Daejeon (KR)
(74) Representative: Prüfer & Partner mbB Patentanwälte · Rechtsanwälte

(57) **Abstract**

The present invention relates to a battery cell in which a cooling sheet is built in a unit cell to directly cool an electrode assembly inside the cell, and a battery module including the same.

## Description

### TECHNICAL FIELD

The following disclosure relates to a technology related to a secondary battery, and more particularly, to a battery cell in which a cooling sheet is built in a unit cell to directly cool an electrode assembly inside the cell, and a battery module including the same.

### BACKGROUND

Generally, a battery is formed in the form of a battery module or a battery pack in which a plurality of battery cells are stacked due to the need for high output and large capacity.

In addition, the battery module and battery pack are cooled using various methods as heat is generated from the battery cells during charging and discharging. As an example, an indirect water cooling method is used.

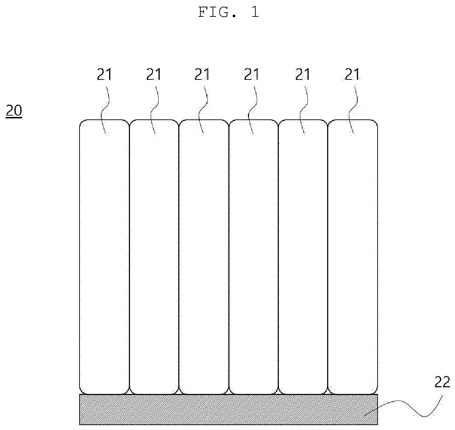

FIG. 1 is a diagram illustrating the conventional indirect water cooling method of the battery module. The indirect cooling method refers to a cooling method of vertically stacking cells 21 within a module 20 and applying a thermal adhesive (TA) 22 to a lower portion of the module to cool the lower portion of the cells 21 with coolant flowing into the lower portion of the module.

However, the indirect water cooling method is only a method of indirectly cooling cells and has technical limitations because it cools only a portion of the cells.

### [Related Art Document]

### [Patent Document]

(Patent Document 1) Korean Patent Laid-Open Publication No. 10-2022-0150693 (published on November 11, 2022)

### SUMMARY

An embodiment of the present invention is directed to providing a battery cell with a cooling sheet built into a unit cell to directly cool an electrode assembly inside the cell, and a battery module including the same.

In one general aspect, a battery cell includes: a case; an electrode assembly accommodated inside the case; and a cooling sheet including a cooling sheet main body and an extension extending from the cooling sheet main body, in which the cooling sheet main body may be accommodated inside the case and may be in direct contact with the electrode assembly, and the extension of the cooling sheet may be configured to protrude to an outside of the case.

One surface of the cooling sheet main body may be in close contact with one surface of the electrode assembly.

A horizontal width of the extension of the cooling sheet may be smaller than that of the cooling sheet main body.

The horizontal width of the extension of the cooling sheet may be configured to be 1/10 or more to 1/3 or less of that of the cooling sheet main body.

The extension of the cooling sheet may be disposed at a horizontal center of the cooling sheet main body.

An area of the cooling sheet main body may be greater than or equal to that of a cathode of the electrode assembly and may be less than or equal to that of the anode of the electrode assembly.

A surface of the cooling sheet may be coated with a metal that does not react with an electrolyte filled inside the case.

A sealing film may be interposed between the case and the extension of the cooling sheet.

The electrode assembly may include a first electrode assembly and a second electrode assembly, and the cooling sheet may be disposed between the first electrode assembly and the second electrode assembly.

One surface of the cooling sheet main body may be in close contact with one surface of the first electrode assembly, and the other surface thereof may be in close contact with one surface of the second electrode assembly.

The case may be a pouch film.

A battery module to which the battery cell described above is applied includes: a cell stack in which the battery cells are stacked in plurality; and a module case accommodating the cell stack.

Each of the plurality of battery cells may be disposed so that extensions of the cooling sheets of the each battery cell protrude downward, and a thermal adhesive may be applied to a lower part of the cell stack, but may be locally applied around the extensions of the cooling sheets of the each battery cell.

When one of the plurality of battery cells is called a first battery cell, and the other one adjacent to the first battery cell is called a second battery cell, the thermal adhesive applied around an extension of a cooling sheet of the first battery cell and the thermal adhesive applied around an extension of a cooling sheet of the second battery cell may be spaced apart from each other.

The battery module may further include: a cooling plate disposed on the lower portion of the cell stack.

### BRIEF DESCRIPTION OF THE DRAWINGS

FIG. 1 is a diagram illustrating a conventional indirect water cooling method of a battery module.
FIG. 2 is a schematic diagram of a battery cell according to an example of the present invention.
FIG. 3 is a side view of FIG. 2.
FIG. 4 is a diagram illustrating a cooling sheet according to an example of the present invention.
FIG. 5 is a schematic diagram of a battery module according to an example of the present invention.

### [Detailed Description of Main Elements]

100: Battery cell
110: Case
120: Electrode assembly
130: Cooling sheet
131: Cooling sheet body
132: Extension
150: Sealing film
200: Battery module
210: Cell stack
220: Module case
230: Thermal adhesive
240: Lower plate

### DETAILED DESCRIPTION OF EMBODIMENTS

Hereinafter, the present invention will be described in detail with reference to the accompanying drawings.

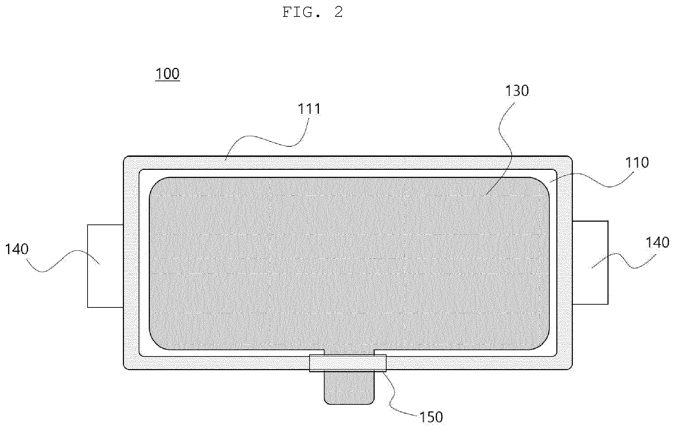

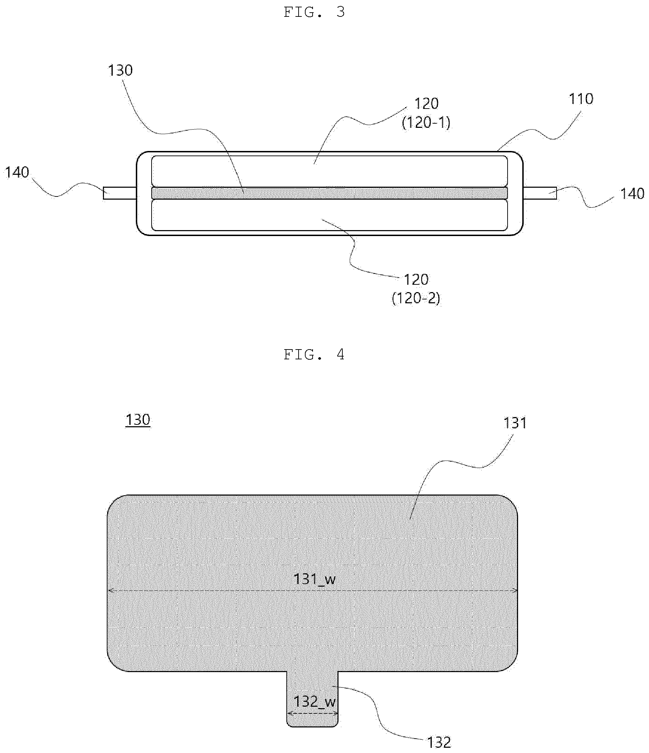

FIG. 2 is a schematic diagram of a battery cell according to an example of the present invention, and FIG. 3 is a side view of Figure 2. As illustrated, a battery cell 100 of the present invention largely includes a case 110, an electrode assembly 120, and a cooling sheet 130.

The case 110 corresponds to an exterior material that accommodates and packages the electrode assembly 120 inside, and may be classified into prismatic, cylindrical, and pouch-type batteries depending on the type of the exterior material. In the present invention, as an example, the case 110 may be composed of a pouch film that is an aluminum laminate sheet. The case 110 may accommodate the electrode assembly 120 and the electrolyte inside and then be sealed along outer edges to have a sealing part 111 formed on the outside of the case 110.

The electrode assembly 120 is the electrode assembly 120 that is composed of a plurality of electrodes, and may have a structure in which a plurality of cathodes, anodes, and separators interposed between the cathodes and anodes are alternately stacked. The electrode assembly may be classified into a jelly roll type, a stack type, and a stack/folding type, and in the present invention, as an example, the electrode assembly 120 may be configured in the jelly roll type. In addition, electrode tabs are formed on each electrode of the electrode assembly 120, and these electrode tabs may be welded together to form electrode leads 140 protruding to the outside of the case 110.

Generally, a battery cell, that is, a unit cell, has a structure in which the electrode assembly is accommodated in the case as described above, but the present invention further includes the cooling sheet 130 inside the unit cell.

The cooling sheet 130 is configured to dissipate heat or cool the electrode assembly 120 by directly contacting the electrode assembly 120 accommodated inside the unit cell, and corresponds to a thin metal plate made of a material with excellent thermal conductivity.

FIG. 4 is a diagram illustrating a cooling sheet according to an example of the present invention. The cooling sheet 130 includes a cooling sheet main body 131 and an extension 132 extending from the cooling sheet main body 131. In this case, the cooling sheet main body 131 is accommodated inside the case 110 and is in direct contact with the electrode assembly 120, and the extension 132 is configured to protrude to the outside of the case 110.

By being configured in this way, according to the present invention, the cooling sheet 130 may receive heat generated from the electrode assembly 120 and discharge the received heat to the outside of the unit cell to dissipate the electrode assembly 120, and simultaneously or separately, the cooling sheet 130 may receive cold air from a cooling plate disposed outside the unit cell and transmit the received cold air to the electrode assembly 120 to directly cool the electrode assembly 120.

In other words, the present invention overcomes the limitations of the conventional indirect cooling method and implements a direct cooling method, and as a result, cooling efficiency increases, the heat generation of the cell may be effectively controlled, and the exposure of the cell to a high temperature environment may be minimized. Furthermore, based on this, the additional effect of shortening the quick charging time by increasing the allowable charging current of the cell may be expected.

In order to improve the heat transfer performance, the cooling sheet main body 131 may be configured so that one surface is in close contact with one surface of the electrode assembly 120.

Additionally, an area of the cooling sheet main body 131 may be configured to correspond to that of the electrode assembly 120. More specifically, when the cathode and anode of the electrode assembly come into contact, heat is generated in the area where they react, and since an area of the anode is larger than that of the cathode, the area of the main body of the cooling sheet 130 may be formed to be equal to a minimum area of the cathode and equal to a maximum area of the anode.

Furthermore, the surface of the cooling sheet 130 may be coated with a metal, which does not react with an electrolyte filled in the case 110, such as nickel (Ni). Accordingly, corrosion of the cooling sheet 130 may be prevented, durability may be secured, and adverse effects that may be caused by the cooling sheet 130 on the cell may be prevented.

Referring back to FIG. 4, a horizontal width 132_w of the extension 132 of the cooling sheet is formed to be smaller than a horizontal width 131_w of the cooling sheet main body 131.

The shape of the cooling sheet 130 is similar to the shape of the electrode, and accordingly, a jig that applies the existing charging and discharging currents may be applied to the cooling sheet 130 in the same way, resulting in cost savings.

Meanwhile, when the width 132_w of the extension 132 of the cooling sheet increases, the heat dissipation performance may increase, but as will be described later, the area used of the thermal adhesive 230 applied to the extension 132 increases, so costs may increase and there may be a disadvantage in terms of the sealing performance. Taking this into consideration, it is preferable to appropriately design the width 132_w of the extension 132. As an example, according to the present invention, the horizontal width 132_w of the extension 132 of the cooling sheet may be configured to be 1/10 or more and 1/3 or less of the horizontal width 131_w of the cooling sheet main body 131.

Further, the extension 132 of the cooling sheet may be disposed at a horizontal center of the cooling sheet main body 131. This may provide uniform heat dissipation and cooling over the entire area of the electrode assembly 120.

In order to improve the sealing performance of the cooling sheet 130, as illustrated in FIG. 2, a sealing film 150 may be interposed between the extension 132 of the cooling sheet and the case 110. That is, the sealing film 150 is fastened and sealed around the extension 132 of the cooling sheet, and the case 110 is seated and sealed thereon, thereby forming a double sealing structure.

Meanwhile, although not illustrated, the extension 132 of the cooling sheet may be composed of a plurality of extensions 132.

Referring back to FIG. 3, the inside of the case 110, that is, the unit cell, may include two or more electrode assemblies 120, and the cooling sheet 130 may be disposed between the two or more electrode assemblies 120. More specifically, the electrode assembly 120 includes a first electrode assembly 120-1 and a second electrode assembly 120-2, and the cooling sheet 130 may be disposed between the first electrode assembly 120-1 and the second electrode assembly 120-2. In this case, one surface (upper surface in the drawing) of the cooling sheet main body 131 may be in close contact with one surface (lower surface in the drawing) of the first electrode assembly 120-1, and the other surface (lower surface in the drawing) thereof may be in close contact with one surface (upper surface in the drawing) of the second electrode assembly 120-2.

In this way, by configuring the plurality of electrode assemblies 120 in the unit cell and disposing the cooling sheet 130 therebetween, more uniform heat dissipation and cooling may be provided over the entire area of the electrode assembly 120.

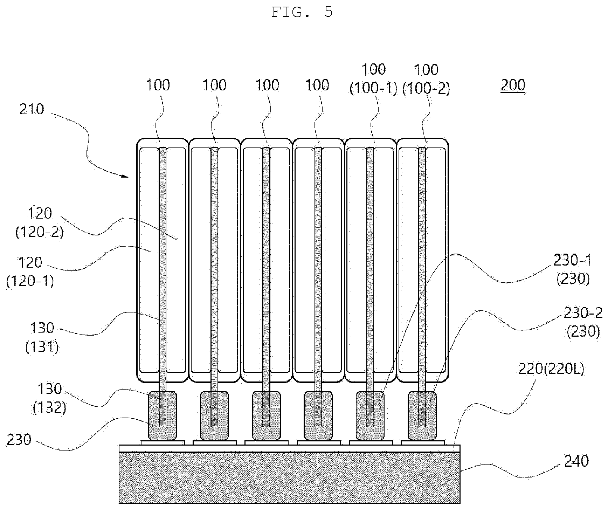

FIG. 5 is a schematic diagram of a battery module according to an example of the present invention, and the battery cell 100 of the present invention described above is applied to the battery module 200 of the present invention.

The battery module 200 includes a cell stack 210 in which the plurality of battery cells 100 are stacked, and a module case 220 that accommodates the cell stack 210. The module case 220 may include a side case, a lower portion case, and an upper case. In the drawing, only a lower portion case 220L is illustrated as an example. Since the structure of this module case is a general configuration, detailed description is omitted.

Each of the plurality of battery cells 100 of the cell stack 210 is disposed so that the extensions 132 of the cooling sheets of each battery cell 100 protrude downward, and a thermal adhesive 230 may be applied to the lower portion of the cell stack 210. The thermal adhesive 230 may be applied, for example, to an upper surface of the lower portion case 220L.

In this case, in the present invention, the thermal adhesive 230 may be applied locally around the extensions 132 of the cooling sheets of each battery cell 100. That is, referring to FIG. 5, when one of the plurality of battery cells 100 is called a first battery cell 100-1 and the other one adjacent to the first battery cell 100-1 is called a second battery cell 100-2, a first thermal adhesive 230-1 applied around the extension 132 of the cooling sheet of the first battery cell 100-1 and a second thermal adhesive 230-2 applied around the extension 132 of the cooling sheet of the second battery cell 100-2 may be disposed to be spaced apart from each other.

In the present invention, since the cooling sheet 130 is built in the battery cell 100, sufficient heat dissipation performance may be secured even if the thermal adhesive 230 is applied locally only around the extension 132 of the cooling sheet, so the use of the thermal adhesive 230 may be greatly reduced, and furthermore, as the thermal adhesives 230 are spaced apart from each other, each battery cell 100 may avoid contact with metal members within the module as much as possible, providing an advantage in design.

Referring back to FIG. 5, the battery module 200 may further include a cooling plate 240 disposed in the lower portion of the cell stack 210. A coolant channel through which coolant flows may be formed inside the cooling plate 240, and cold air may be transmitted through the coolant channel. Specifically, according to the present invention, as the cold air of the coolant flowing through the cooling plate 240 is transmitted to the cooling sheet 130 through the thermal adhesive 230, and the cold air transmitted to the cooling sheet 130 is directly transmitted to the electrode assembly 120 inside the unit cell, the direct cooling method may be implemented.

Meanwhile, in the present invention, the battery module 200 is a term that includes generally used battery modules or battery packs. For example, when the battery module 200 is formed in a cell to pack structure, the battery module 200 may include the battery pack formed in a structure in which the lower portion case of the module case is omitted and the battery cells or the cell stack is directly seated on a lower plate of the battery pack.

According to the present invention, the cooling sheet is built into the unit cell to directly cool the electrode assembly inside the cell, thereby improving the heat generation. Accordingly, an additional effect can be expected in that the quick charging time may be shortened by increasing the allowable charging current of the battery.

In addition, by using the thermal adhesive locally around the cooling sheet that protrudes to the outside of the cell, effects such as reduction in material costs can be expected.

Although exemplary embodiments of the present invention has been described with reference to the accompanying drawings, those skilled in the art will appreciate that various modifications and alterations may be made without departing from the spirit or essential feature of the present invention. Therefore, it should be understood that the above-mentioned embodiments are exemplary in all aspects but are not limited thereto.

## Claims

1. A battery cell, comprising:
a case;
an electrode assembly accommodated inside the case; and
a cooling sheet including a cooling sheet main body and an extension extending from the cooling sheet main body,
wherein the cooling sheet main body is accommodated inside the case and is in direct contact with the electrode assembly, and the extension of the cooling sheet is configured to protrude to an outside of the case.

2. The battery cell of claim 1, wherein one surface of the cooling sheet body is in close contact with one surface of the electrode assembly.

3. The battery cell of any one of claims 1 to 2, wherein a horizontal width of the extension of the cooling sheet is smaller than that of the cooling sheet main body.

4. The battery cell of claim 3, wherein the horizontal width of the extension of the cooling sheet has 1/10 or more to 1/3 or less of that of the cooling sheet main body.

5. The battery cell of any one of claims 1 to 4, wherein the extension of the cooling sheet is disposed at a horizontal center of the cooling sheet main body.

6. The battery cell of any one of claims 1 to 5, wherein an area of the cooling sheet main body is greater than or equal to that of a cathode of the electrode assembly and is less than or equal to that of the anode of the electrode assembly.

7. The battery cell of any one of claims 1 to 6, wherein a surface of the cooling sheet is coated with a metal that does not react with an electrolyte filled inside the case.

8. The battery cell of any one of claims 1 to 7, wherein a sealing film is interposed between the case and the extension of the cooling sheet.

9. The battery cell of any one of claims 1 to 8, wherein the electrode assembly includes a first electrode assembly and a second electrode assembly, and
the cooling sheet is disposed between the first electrode assembly and the second electrode assembly.

10. The battery cell of claim 9, wherein one surface of the cooling sheet main body is in close contact with one surface of the first electrode assembly, and the other surface thereof is in close contact with one surface of the second electrode assembly.

11. The battery cell of any one of claims 1 to 10, wherein the case is a pouch film.

12. A battery module to which the battery cell of any one of claims 1 to 11 is applied, comprising:
a cell stack in which the battery cells are stacked in plurality; and
a module case accommodating the cell stack.

13. The battery module of claim 12, wherein each of the plurality of battery cells is disposed so that extensions of the cooling sheets of the each battery cell protrude downward, and
a thermal adhesive is applied to a lower part of the cell stack, but is locally applied around the extensions of the cooling sheets of the each battery cell.

14. The battery module of claim 13, wherein when one of the plurality of battery cells is called a first battery cell, and the other one adjacent to the first battery cell is called a second battery cell,
the thermal adhesive applied around an extension of a cooling sheet of the first battery cell and the thermal adhesive applied around an extension of a cooling sheet of the second battery cell are spaced apart from each other.

15. The battery module of any one of claims 12 to 14, further comprising:
a cooling plate disposed on the lower portion of the cell stack.
